# EUROPEAN PATENT APPLICATION

(11) **EP 1 793 593 A2**
(43) Date of publication of application: **06.06.2007**
(21) Application number: 06123199.9
(22) Date of filing: 30.10.2006
(51) Int. Cl.: H04N 5/445

(54) **Method and apparatus for displaying a channel list**

(30) Priority: 05.12.2005 KR 20050117547
(71) Applicant: SAMSUNG ELECTRONICS CO., LTD., Suwon-si, Gyeonggi-do (KR)
(72) Inventor: Seok, Dong-ryun, Songpa-gu Seoul (KR)
(74) Representative: Waddington, Richard

(57) **Abstract**

A method of displaying a channel list and a video processing apparatus thereof are disclosed, in which convenience of a user is improved. The video processing apparatus provides a channel list that displays each channel name and each channel number. If a specific channel on the channel list is selected, the video processing apparatus displays brief information on a current broadcasting program of the selected channel along with the channel list. Since the video processing apparatus provides the channel list for displaying brief information required for retrieving channels to allow a user to identify it at a glance, it is possible to reduce the number of times of the user's key manipulation required for retrieving the channels. As a result, the video processing apparatus can improve convenience of the user.

## Description

The present invention relates to a method of displaying a channel list and a video processing apparatus thereof. More particularly, the present invention relates to a method of displaying a channel list and a video processing apparatus thereof, in which the channel list is displayed along with channel information.

A digital television is a video processing apparatus that receives digital broadcasting signals from a broadcasting station and outputs video and audio signals. With application of digital technology to broadcasting, the number of channels that provide broadcasting signals is on an increasing trend.

With the increase of the number of channels, a user requires much time to retrieve all the channels and channel numbers corresponding to the respective channels. The digital television provides a channel list to facilitate retrieval of the channels, wherein the channel list displays the channels corresponding to the respective channel numbers in accordance with the order of the channel numbers. Since the user can identify the channel numbers corresponding to the respective channels at a glance using the channel list, it is possible to reduce the time required to retrieve the channels.

However, the channel list simply displays channel names and channel numbers but does not provide brief information on each channel. Accordingly, the user cannot easily identify a broadcasting program provided to each channel or information on each channel using the channel list. For this reason, the digital television has a problem in that convenience of the user is reduced.

Meanwhile, information on each channel includes an electronic program guide (EPG). The digital television provides information on each channel through a separate EPG menu. Therefore, the user should use such a separate EPG menu to retrieve information on each channel.

The EPG menu includes detailed information on each channel, for example, detailed information on broadcasting programs provided from respective channels. That is, various EPG menus are provided to show various kinds of information on each channel. In this case, the EPG menu requires a complicated step in retrieving information and causes the user to fail to identify brief information on channels at a glance. For this reason, the digital television reduces convenience of the user.

Accordingly, the present invention is directed to a method of displaying a channel list and a video processing apparatus thereof, which substantially obviate one or more problems due to limitations and disadvantages of the

### related art.

An object of the present invention is to provide a method of displaying a channel list, in which convenience of a user is improved.

Another object of the present invention is to provide a video processing apparatus that performs the method of displaying a channel list.

According to the present invention there is provided an apparatus and method as set forth in the appended claims. Preferred features of the invention will be apparent from the dependent claims, and the description which follows.

According to an aspect of the present invention, a method of displaying a channel list includes displaying the channel list including channel name and channel number of each channel that provides a broadcasting program, and displaying program information on a current broadcasting program of a specific channel if a cursor is positioned on the specific channel of the channel list.

Preferably, the method further includes selecting whether or not to display the program information.

Meanwhile, the step of displaying program information includes detecting program information corresponding to the current broadcasting program of the specific channel from program service information including detailed information on the plurality of channels if the cursor is positioned on the specific channel of the channel list, and displaying the detected program information as a pop-up window.

Preferably, the step of displaying the program information includes determining whether the program information is selected to be displayed, displaying the program information of the channel pointed by the cursor if the program information is selected to be displayed, and displaying only the channel list if the program information is not selected to be displayed.

Also, the method preferably further includes selecting the position of a window for displaying the program information.

Meanwhile, the program information may or may not be displayed in an overlapping manner with the channel list.

Preferably, the method further includes displaying program information on a previous or next broadcasting program of the current channel in the program information window in accordance with a user's manipulation.

Specifically, the step of displaying program information on a previous or next broadcasting program preferably includes activating the program information window, displaying the program information corresponding to the previous broadcasting program in the program information window if a request command for displaying the program information corresponding to the previous broadcasting program is received, and displaying the program information corresponding to the next broadcasting program in the program information window if a request command for displaying the program information corresponding to the next broadcasting program is received.

Preferably, the method further includes receiving the program service information including detailed information on the plurality of channels along with a broadcasting signal to store them.

Furthermore, the channel list and the channel information are generated using the program service information.

In another aspect of the present invention, a video processing apparatus includes:
a tuner for receiving program service information including detailed information on broadcasting programs provided from a plurality of channels or a single dedicated data channel and broadcasting signals provided from the plurality of channels,
a data memory for storing the program service information,
a controller for detecting information including each channel number and each channel name from the program service information to generate a channel list, and for detecting information corresponding to a current broadcasting program of a channel pointed by a cursor on the channel list from the program service information to generate program information, and
a video display unit for displaying video corresponding to the broadcasting signals and for displaying the channel list and the program information.

Preferably, the program information is displayed along with the channel list.

In the method of displaying a channel list and the video processing apparatus, the video processing apparatus is preferably operable to provide the channel list for displaying brief information required for retrieving channels to allow the user to identify it at a glance. Thus, it is possible to reduce the number of times of the user's key manipulation is required for retrieving the channels. As a result, the video processing apparatus can improve convenience of the user.

For a better understanding of the invention, and to show how embodiments of the same may be carried into effect, reference will now be made, by way of example, to the accompanying diagrammatic drawings in which:
FIG. 1 is a block diagram illustrating a digital television according to the preferred embodiment of the present invention;
FIG. 2 is a flow chart illustrating a method of displaying a channel list according to the preferred embodiment of the present invention;
FIG. 3 illustrates an example of a screen that displays a channel list in a video display unit shown in FIG. 1;
FIG. 4 is a flow chart illustrating a method of displaying program information shown in FIG. 2; and
FIG. 5 is a flow chart illustrating a method of displaying program information on a previous or next broadcasting program shown in FIG. 3.

Reference will now be made in detail to the preferred embodiments of the present invention, examples of which are illustrated in the accompanying drawings. Wherever possible, the same reference numbers will be used throughout the drawings to refer to the same or like parts.

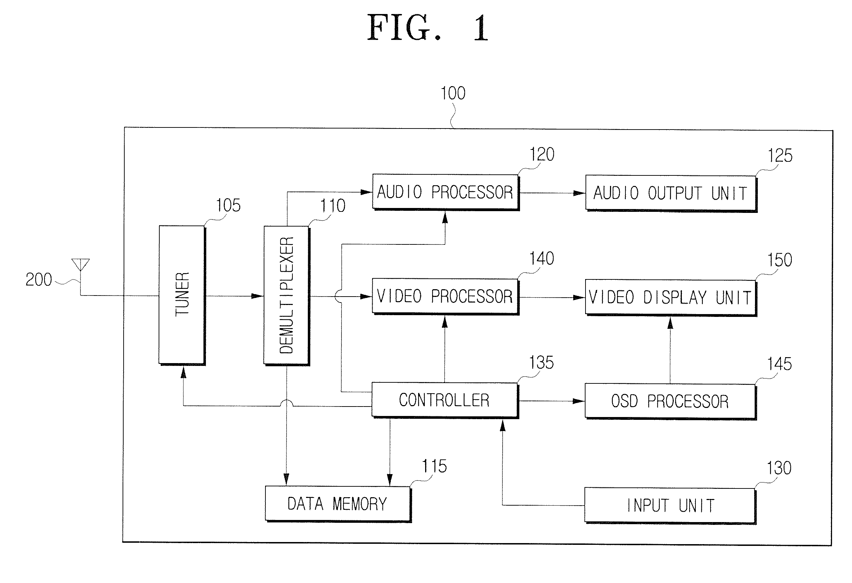

FIG. 1 is a block diagram illustrating a digital television according to the preferred embodiment of the present invention.

Referring to FIG. 1, a digital television 100 according to the preferred embodiment of the present invention includes a tuner 105, a demultiplexer 110, a data memory 115, an audio processor 120, an audio output unit 125, an input unit 130, a controller 135, a video processor 140, an on screen display (OSD) processor 145, and a video display unit 150.

Specifically, the tuner 105 sets one of a plurality of channels as an input channel, receives a broadcasting signal of the input channel from an external antenna 200, and provides the received broadcasting signal to the demultiplexer 110. Also, the tuner 105 receives program and service information protocol (PSIP) along with the broadcasting signal and provides them to the demultiplexer 110.

The PSIP includes information on a broadcasting program provided from each channel and information on the broadcasting signal. The PSIP includes a system time table (STT), a master guide table (MGT), a virtual channel table (VCT), a rating region table (RRT), an event information table (EIT), and an extended text table (ETT).

In more detail, the STT includes information on current time and date. The MGT includes a program identifier (PID) of all the tables excluding the STT and version information. The VCT includes information on a virtual channel, for example, channel name. The RRT includes information on a viewing limit rate of the broadcasting program. The EIT includes brief information on broadcasting programs provided from all the channels included in the VCT, and information stored in the EIT is used for electronic program guide (EPG). The ETT includes detailed information on each broadcasting program, for example, information on a summary of a program, its background and the main actors and/or actresses.

Meanwhile, the demultiplexer 110 divides the PSIP, which is received along with the broadcasting signal from the tuner 105, from the broadcasting signal and provides the PSIP to the data memory 115. Also, the demultiplexer 110 divides the broadcasting signal into a video signal and an audio signal. The demultiplexer 110 provides the audio signal to the audio processor 120 and provides the video signal to the video processor 140.

The data memory 115 stores data required for driving the digital television 100. Particularly, the data memory 115 stores the PSIP received from the demultiplexer 110.

The audio processor 120 decodes the audio signal received from the demultiplexer 110 and outputs the decoded signal. The audio output unit 125 receives the decoded audio signal from the audio processor 120 and outputs audio.

Meanwhile, the input unit 130 generates an input command in accordance with a user's manipulation and provides the input command to the controller 135. Examples of the input signal include a channel change request signal for changing the input channel, a volume control signal for controlling a volume of the audio output unit 125, a power control signal for turning on/off the power of the digital television 100, and a menu request signal for displaying an OSD menu. In the preferred embodiment of the present invention, the input unit 130 may be a key pad provided in a single body with a main body of the digital television 100. Alternatively, the input unit 130 may be a remote controller provided separately from the main body of the digital television 100.

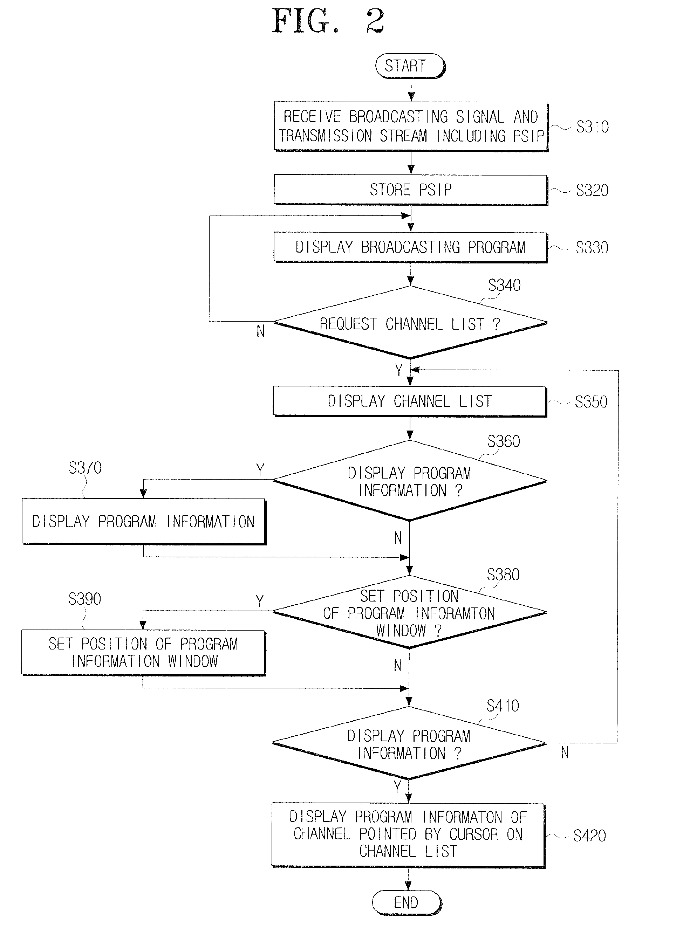

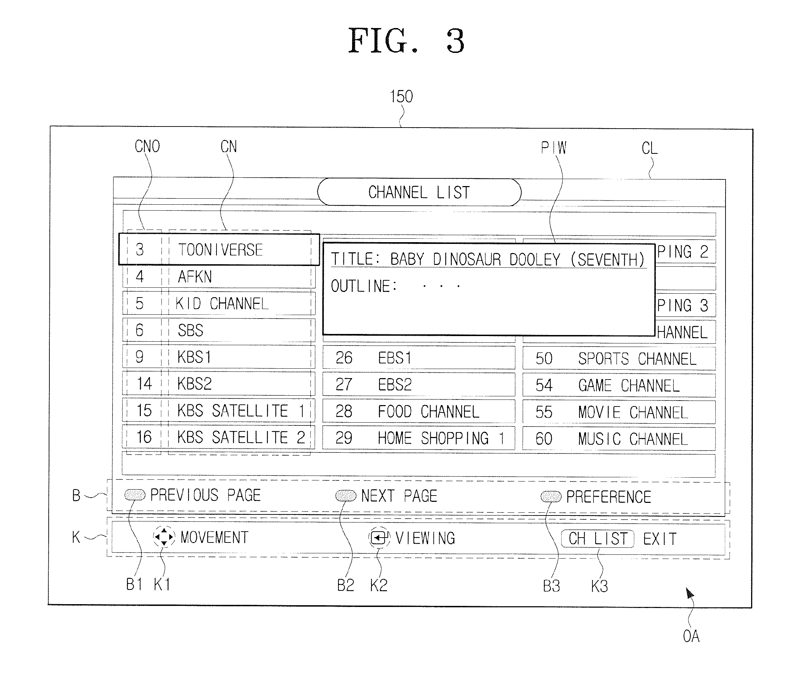

The controller 135 outputs a control signal in response to the input signal received from the input unit 130 to control the tuner 105, the data memory 115, the audio processor 120, the video processor 140, and the OSD processor 145. Particularly, the controller 135 detects brief information and/or other kinds of program information of a plurality of channels from the PSIP stored in the data memory 115. Channel list is then generated. The channel list will be described in more detail with reference to FIGs. 2 and 3.

The controller 135 detects brief information and/or other kinds of program information on a broadcasting program of a channel pointed by a curser in the channel list. The program information will also be described in more detail with reference to FIGs. 2 and 3.

Furthermore, the controller 135 changes the input channel of the tuner 105 to the channel input from the input unit 130 if the channel change request signal is received from the input unit 130. The controller 135 controls the volume of the audio output unit 125 at the size of the volume input from the input unit 130 if the volume control signal is received from the input unit 130. The controller 135 outputs the control signal to the OSD processor 145 to display the OSD menu if the menu request signal is received from the input unit 130.

Meanwhile, the video processor 140 receives the video signal from the demultiplexer 110, decodes the received video signal, and provides the decoded signal to the video display unit 150. Also, the video processor 140 provides the program information and the channel list generated by the controller 135 to the video display unit 150.

The OSD processor 145 generates an OSD signal for outputting the OSD menu under the control of the controller 135 and provides the OSD signal to the video display unit 150.

The video display unit 150 receives the video signal from the video processor 140 to display video, and receives the OSD signal from the OSD processor 145 to display the OSD menu. The OSD menu includes a picture quality setting menu for controlling factors related to picture quality and a channel conversion menu for automatically converting a channel into another channel. Also, the video display unit 150 receives the channel list and the program information from the video processor 140 to display them.

As described above, the digital television 100 provides both the channel list for providing brief information on the plurality of channels and the program information for providing brief information on the broadcasting program. The digital television 100 can provide brief information required for retrieving channels so as to allow the user to identify it at a glance without retrieving all the channels one by one. Accordingly, the user is not required to convert the input channels one by one to retrieve them, and thus convenience of the user can be improved.

FIG. 2 is a flow chart illustrating a method of displaying a channel list according to the preferred embodiment of the present invention, and FIG. 3 illustrates an example of a screen that displays the channel list in the video display unit shown in FIG. 1.

Referring to FIG. 1 to FIG. 3, the tuner 105 receives the broadcasting signal and a transmission stream including the PSIP from the input channel and provides them to the demultiplexer 110 (S310).

Subsequently, the demultiplexer 110 divides the PSIP from the transmission stream to provide the divided PSIP to the data memory 115, and divides the broadcasting signal into the audio signal and the video signal to respectively provide them to the audio processor 120 and the video processor 140. The data memory 115 stores the PSIP received from the demultiplexer 110 (S320).

The audio processor 120 decodes the audio signal to provide the decoded signal to the audio output unit 125 while the video processor 140 decodes the video signal to provide the decoded signal to the video display unit 150. The audio output unit 125 outputs audio corresponding to the audio signal while the video display unit 150 displays video corresponding to the video signal. Thus, the digital television 100 displays the broadcasting program corresponding to the broadcasting signal (S330).

The controller 135 determines whether a channel list request command to display the channel list (CL) has been received from the input unit 130 (S340).

If it is determined that the channel list request command has not been received from the input unit 130 in step S340, the controller 135 maintains the current status (S330).

If it is determined that the channel list request command has been received from the input unit 130 in step S340, the controller 135 detects brief information on the plurality of channels from the PSIP stored in the data memory 115 to generate the channel list and provides the generated channel list to the video processor 140. The video processor 140 provides the channel list to the video display unit 150 while the video display unit 150 displays the channel list (S350).

As shown in FIG. 3, the channel list displays a channel number (CNO) corresponding to each channel and a channel name (CN) corresponding to each channel. The channel list displays each channel number and each channel name by mapping them with each other. Other types of channel lists are possible such as the traditional EPG having the two-dimensional time axis verses the channel axis and showing program titles.

Buttons B for manipulating the channel list and function keys K for manipulating the channel list are displayed on the lower end of the channel list. The buttons include previous and next page buttons B1 and B2 moving pages of the channel list and a preference button B3. The function keys K display keys for manipulating the channel list among keys provided in the input unit 130. The function keys K include a direction key K1 moving a cursor on the channel list, an input key K2 setting a channel pointed by the cursor as an input channel to allow the user to view a broadcasting program of a corresponding channel, and a channel list key K3 ending the channel list. Furthermore, the user may be provided with either a menu or a direct key that deactivates the program information window.

If the cursor is positioned on a specific channel of the channel list, a program information window (PIW) for displaying program information on a broadcasting program provided from the channel pointed by the cursor is displayed in a type of a pop-up window. For example, if the cursor is positioned on a channel number 3, the program information window displays program information on a broadcasting program being currently broadcasted through the channel number 3. The program information includes information on title of the broadcasting program, the number of times of broadcasting, outline, and so on.

Referring to FIG. 1 to FIG. 3 again, the controller 135 determines whether a command for displaying the program information window has been received from the input unit 130 (S360).

If the command for displaying the program information window has been received from the input unit 130 in step S360, the controller 135 displays the program information window in accordance with the user's manipulation (S370). Thus, the channel list may display or may not display the program information window in accordance with the user's selection. Selection of the program information window may be implemented through either the menu provided from the channel list or the OSD menu.

Meanwhile, if the command for displaying the program information window has not been received from the input unit 130 in step S360 or after the step S370, the controller 135 determines whether a command for setting the position of the program information window has been received from the input unit 130 (S380).

If the command for setting the position of the program information window has been received from the input unit 130 in step S380, the controller 135 sets the position of the program information window in accordance with the command received from the input unit 130 (S390). The program information window may be displayed overlapped with the channel list as shown in FIG. 3 in accordance with the setting in step S390. Alternatively, the program information window may be displayed in a peripheral area (OA) where the channel list is not displayed. Furthermore, the position of the program information window may be set at predefined positions in the screen or may be set at a particular position of the screen by manipulation of the arrow keys. That is, various ways to change the position of the program information window may be implemented without departing from the spirit of the invention.

Meanwhile, If the command for setting the position of the program information window has not been received from the input unit 130 in step S380 or after the step 390, the controller 135 determines whether the program information window should be displayed if the cursor is positioned on the specific channel of the channel list (S410). Whether the program information window is to be displayed is determined by the step S360.

If the program information window is set so as not to be displayed in step S410, the controller 135 maintains the current status (S350).

Meanwhile, if the program information window is set to be displayed in step S410, the controller 135 displays program information of the current broadcasting program of the channel pointed by the cursor in the program information window (S420). In this case, the user can retrieve brief information of the current broadcasting program of the plurality of channels using the channel list without retrieving all the channels one by one. Therefore, the digital television 100 can improve convenience to the user because the user can identify brief information of each broadcasting program and the plurality of channels at a glance when retrieving the channels and the broadcasting program.

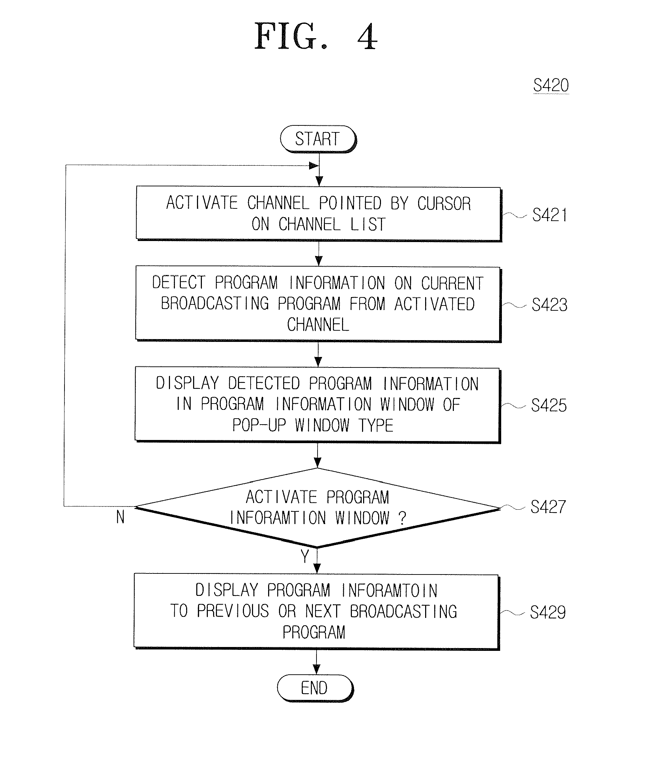

FIG. 4 is a flow chart illustrating a method of displaying the program information shown in FIG. 3.

Referring to FIGs. 1, 3 and 4, the controller 135 activates channel number and channel name pointed by the cursor on the channel list (S421).

Subsequently, the controller 135 detects program information on the current broadcasting program on the activated channel from the PSIP stored in the data memory 115 (S423).

The controller 135 displays program information window including the detected program information (S425).

The controller 135 determines whether the program information window has been activated as the cursor is moved from the channel list to the program information window by the user's manipulation (S427).

If the program information window has not been activated in step S427, the controller 135 moves the cursor from the channel list in accordance with the user's manipulation (S421).

Meanwhile, if the program information window has been activated in step S427, the controller 135 displays program information on a previous or next broadcasting program of the broadcasting program currently displayed in the program information window in accordance with the command received from the input unit 130 (S429). For example, if the program information window is activated in a state that the cursor is positioned on the channel number 3 of the channel list, the controller 135 displays the previous or next broadcasting program of the channel number 3 in the program information window in accordance with the command input from the input unit 130.

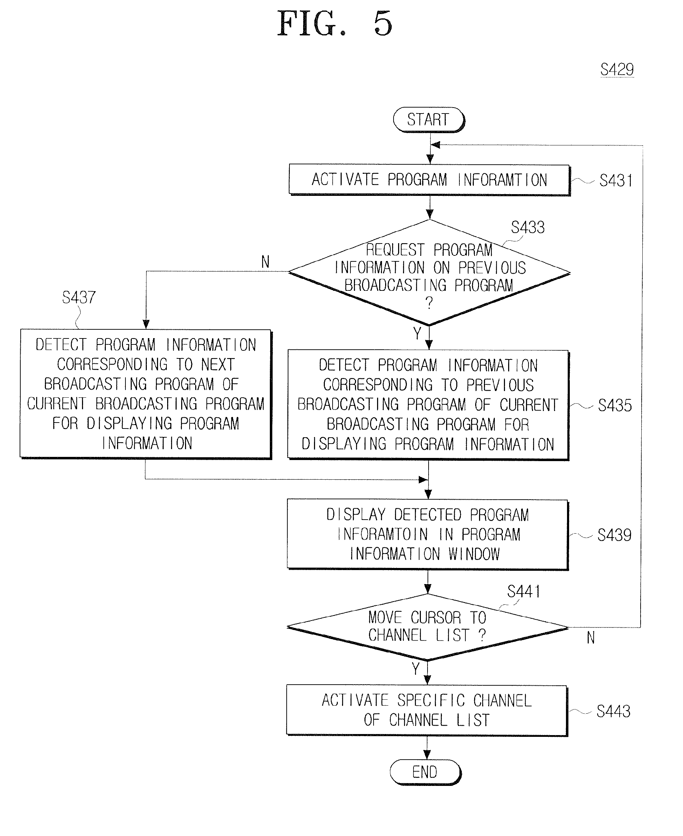

FIG. 5 is a flow chart illustrating a method of displaying program information on the previous or next broadcasting program shown in FIG. 3.

Referring to FIGs. 1, 3 and 5, the controller 135 activates the program information window in accordance with the user's manipulation (S431).

Subsequently, the controller 135 determines whether the command for requesting program information corresponding to the previous broadcasting program of the broadcasting program currently displayed in the program information window has been received from the input unit 130 (S433).

If the command for requesting program information corresponding to the previous broadcasting program has been received from the input unit 130 in step S433, the controller 135 detects program information on the previous broadcasting program of the broadcasting program currently displayed in the program information window among broadcasting programs of the channel selected by the channel list from the PSIP stored in the data memory 115 (S435).

Meanwhile, if the command for requesting program information corresponding to the next broadcasting program has been received from the input unit 130 in step S433, the controller 135 detects program information on the next broadcasting program of the broadcasting program currently displayed in the program information window among broadcasting programs of the channel selected by the channel list from the PSIP stored in the data memory 115 (S437).

After the steps S435 and S437, the controller 135 provides the detected program information to the video processor 140. The video processor 140 provides the program information to the video display unit 150 while the video display unit 150 displays the program information (S439).

For example, if the channel number 3 is selected from the channel list and the first broadcasting program is currently broadcasted on the channel number 3, program information on the first broadcasting program is displayed in the program information window. Afterwards, the program information window is activated, and if program information on the second broadcasting program corresponding to the previous broadcasting program of the first broadcasting program on the channel number 3 is requested, the program information on the second broadcasting program is displayed in the program information window.

Subsequently, the controller 135 determines whether the command for requesting activation of the channel list has received from the input unit 130 (S441).

If the command for requesting activation of the channel list has not received from the input unit 130 in step S441, the controller 135 maintains the activated status of the program information window (S431).

Meanwhile, if the command for requesting activation of the channel list has received from the input unit 130 in step S441, the controller 135 moves the cursor to the channel list to activate the channel list (S443).

As described above, the digital television 100 provides the channel list for displaying the program information on the previous or next broadcasting program in addition to the current broadcasting program provided from the specific channel. Therefore, since the digital television 100 can provide brief information required for retrieving channels so as to allow the user to identify it at a glance, it is possible to improve convenience to the user.

In the present invention as described above, the digital television provides the channel list for displaying brief information on the current broadcasting program of each channel in addition to information on channel number corresponding to the plurality of channels and channel name corresponding to the plurality of channels. In other words, the channel list provides brief information required for retrieving the channels. Therefore, it is possible to reduce the number of times of the user's key manipulation required for retrieving the channels. As a result, the digital television can improve convenience of the user.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of displaying a channel list comprising:
a) displaying the channel list including channel name and channel number of each channel that provides a broadcasting program; and
b) displaying program information of a current broadcasting program of a specific channel if a cursor is positioned on the specific channel of the channel list.

2. The method as claimed in claim 1, further comprising:
c) setting whether or not to display the program information before the step b).

3. The method as claimed in claim 1 or claim 2, wherein the step b) includes:
b-1) detecting program information corresponding to the current broadcasting program of the specific channel from program service information including detailed information on the plurality of channels if the cursor is positioned on the specific channel of the channel list; and
b-2) displaying the detected program information in a type of a pop-up window.

4. The method as claimed in any preceding claim, wherein the step b) includes:
b-3) determining whether the program information has been set to be displayed;
b-4) displaying the program information of the channel pointed by the cursor if the program information has been set to be displayed in the step b-3); and
b-5) displaying only the channel list if the program information has been set so as not to be displayed in the step b-3).

5. The method as claimed in any preceding claim, further comprising:
d) setting the position of a window for displaying the program information.

6. The method as claimed in any preceding claim, wherein the program information is displayed overlapped with the channel list.

7. The method as claimed in any one of claims 1 to 5, wherein the program information is displayed in an area excluding an area where the channel list is displayed.

8. The method as claimed in any preceding claim, further comprising:
e) displaying program information on a previous or next broadcasting program of the channel based on a current broadcasting program, which displays the program information, in the program information window in accordance with a user's manipulation if the program information window that displays the program information is activated.

9. The method as claimed in claim 8, wherein the step e) includes:
e-1) activating the program information window;
e-2) displaying the program information corresponding to the previous broadcasting program in the program information window if a request command for displaying the program information corresponding to the previous broadcasting program is received; and
e-3) displaying the program information corresponding to the next broadcasting program in the program information window if a request command for displaying the program information corresponding to the next broadcasting program is received.

10. The method as claimed in any preceding claim, further comprising:
f) receiving the program service information including detailed information on the plurality of channels along with a broadcasting signal to store them before the step b).

11. The method as claimed in claim 10, wherein the channel list and the channel information are generated using the program service information.

12. A video processing apparatus comprising:
a tuner (105) for receiving program service information including detailed information on broadcasting programs provided from a plurality of channels and broadcasting signals provided from the plurality of channels;
a data memory (115) for storing the program service information;
a controller (135) for detecting information including each channel number and each channel name from the program service information to generate a channel list, and for detecting information corresponding to a current broadcasting program of a channel pointed by a cursor on the channel list from the program service information to generate program information; and
a video display unit (150) for displaying video corresponding to the broadcasting signals and displaying the channel list and the program information.

13. The video processing apparatus as claimed in claim 12, wherein the program information is displayed along with the channel list.

14. A method of displaying a channel list in a television receiver comprising:
a) displaying a channel list which visually indicates at least of a channel name or a channel number of a plurality of channels;
b) displaying program information of a predetermined channel among said channel list if a cursor is positioned on an area corresponding to the visual indication of said first channel.

15. The method as claimed in claim 14, wherein said program information is displayed as a pop-up window.

16. The method as claimed in claim 14, wherein said program information is displayed in an overlapping manner with said channel list.

17. The method as claimed in claim 16, wherein said program information is displayed in a predetermined portion of said channel list.

18. The method as claimed in claim 15, wherein the position of said pop-up window is varied in accordance with a user input.

19. The method as claim in claim 18, wherein said program information includes a plot of the current program of said predetermined channel.

20. The method as claimed in claim 19, wherein said program information further includes background of the current program of said predetermined channel.
